# EUROPÄISCHE PATENTSCHRIFT

(11) **EP 2 984 718 B1**
(45) Veröffentlichungstag und Bekanntmachung des Hinweises auf die Patenterteilung: **01.11.2017**
(21) Anmeldenummer: 14728913.6
(22) Anmeldetag: 03.06.2014
(51) Int. Cl.: H02G 5/06, H02B 13/035

(54) **ISOLATIONSSYSTEM SOWIE MONTAGEVERFAHREN EINES ISOLATIONSSYSTEMS**
INSULATING SYSTEM AND MOUNTING METHOD FOR AN INSULATING SYSTEM
SYSTÈME ISOLANT AINSI QUE PROCÉDÉ DE MONTAGE D'UN SYSTÈME ISOLANT

(30) Priorität: 14.06.2013 DE 102013211133
(43) Veröffentlichungstag der Anmeldung: 17.02.2016
(73) Patentinhaber: Siemens Aktiengesellschaft, 80333 München (DE)
(72) Erfinder: BEUTEL, Stefan, 10555 Berlin (DE); KLEINSCHMIDT, Andreas, 16515 Oranienburg (DE); WETTERNEY, Andreas, 39042 Brixen (DE); MIELKE, Dajana, 16515 Oranienburg (DE)
(86) Internationale Anmeldenummer: PCT/EP2014/061421
(87) Internationale Veröffentlichungsnummer: WO 2014/198581

(56) Entgegenhaltungen:
- EP-A1- 0 593 344
- EP-A1- 0 597 147
- EP-A2- 0 181 955
- JP-A- 2004 104 897

## Beschreibung

Die Erfindung betrifft ein Isolationssystem mit einer elektrisch isolierenden im Wesentlichen scheibenförmigen Isolationsanordnung, welche eine Grundfläche überspannt, wobei die Isolationsanordnung zumindest ein erstes und ein zweites Teilelement aufweist, zwischen denen ein Fügespalt angeordnet ist, welcher die Grundfläche überspannt. Des Weiteren betrifft die Erfindung ein Montageverfahren eines Isolationssystems, welches eine im Wesentlichen scheibenförmige eine Ebene überspannende elektrisch isolierende Isolationsanordnung aufweist.

Aus der Offenlegungsschrift DE 10 2004 056 160 A1 ist ein Isolationssystem bekannt, welches eine elektrisch isolierende Isolationsanordnung aufweist. Die elektrisch isolierende Isolationsanordnung ist im Wesentlichen scheibenförmig ausgearbeitet, wobei die Isolationsanordnung eine Grundfläche überspannt. Die dortige Isolationsanordnung ist dabei im Wesentlichen einstückig ausgeformt, so dass die Anzahl von Dichtflächen bzw. Fügespalten innerhalb der Isolationsanordnung reduziert ist. Somit ergibt sich zum einen ein winkelsteifes Isolationssystem, welches zuverlässig elektrischen Isolationszwecken dient. Andererseits ist die Variabilität eines derartigen Isolationssystems als begrenzt einzuschätzen. Des Weiteren erweist es sich als aufwändig, das bekannte Isolationssystem zu montieren und beispielsweise in einer gasisolierten Schaltanlage einzusetzen.

Aus der Europäischen Patentanmeldung EP 0 597 147 A1 geht eine gekapselte gasisolierte Hochspannungsanlage hervor, welche eine scheibenförmige Isolationsanordnung aufweist, die eine Grundfläche überspannt. Zwischen den Teilelementen erstreckt sich ein Fügespalt. Bei dem bekannten Isolationssystem wird eine Vielzahl von Dichtungen verwandt, um jedes der Teilelemente für sich als fluiddichte Barriere nutzen zu können. Entsprechend entstehen mehrere voneinander separierte Teilvolumina, welche voneinander separiert sind und entsprechend separat zu betreiben sind. Das Dokument EP 0 593 344 A1 beschreibt ein Isolationssystem, bei welchem zwischen einem ersten und einem zweiten Teilelement ein Fügespalt angeordnet ist. Über eine Ausnehmung in einem Teilelement ist der Fügespalt dauerhaft mit einem benachbarten Fluidvolumen verbunden.

Folglich ergibt sich als Aufgabe der Erfindung ein Isolationssystem zu schaffen, welches bei vorteilhaften Isolationseigenschaften variabler zu verwenden ist und ein vereinfachtes Montieren ermöglicht.

Erfindungsgemäß wird diese Aufgabe bei einem Isolationssystem der eingangs genannten Art dadurch gelöst, dass der Fügespalt über einen schaltbaren Fluidkanal mit einem benachbarten Fluidvolumen verbindbar ist.

Ein Isolationssystem dient einem elektrisch isolierten Halten eines Elementes bzw. einem Beabstanden von Elementen, die unterschiedliche elektrische Potentiale aufweisen können. So kann das Isolationssystem beispielsweise dazu dienen, einen Phasenleiter, welcher beispielsweise Hochspannungspotential führt, gegenüber einem beispielsweise Erdpotential führenden Tragelement, an welchem der Phasenleiter beispielsweise abgestützt ist, elektrisch isoliert zu positionieren. Eine scheibenförmige Isolationsanordnung kann bevorzugt von zumindest einem Phasenleiter durchsetzt sein. Ein Durchsetzen sollte die Grundfläche querend erfolgen. Der Phasenleiter kann fluiddicht in die Isolationsanordnung bzw. in zumindest eines der Teilelemente eingebettet sein. Insbesondere bei Nutzung einer scheibenförmigen Isolationsanordnung ist das Isolationssystem geeignet, beispielsweise über einer Öffnung (Grundfläche) nach Art einer Membran ein Verdämmen derselben zu bewirken, so dass die Öffnung durch das Isolationssystem im Wesentlichen geschlossen. Insbesondere kann ein Ein- bzw. Austritt von z.B. Fluiden durch die Öffnung verhindert sein. In der Öffnung kann sich beispielsweise eine Ebene erstrecken. Die Öffnung kann beispielsweise an einem Rohr bzw. Rohrstutzen liegen. Dabei kann die scheibenförmige Isolationsanordnung sowohl stirnseitig eine Öffnung am Rohr/Rohrstutzen überspannen oder auch eine Verdämmung innerhalb der Rohrausnehmung bewirken. Eine Grundfläche kann eben verlaufen oder beispielsweise auch gekrümmt verlaufen. Dabei kann das Isolationssystem eine fluiddichte Barriere darstellen. Insbesondere sollte die scheibenförmige Isolationsanordnung fluiddicht ausgeführt sein. Bevorzugt sollte das Isolationssystem eine Ausnehmung/Öffnung fluiddicht verschließen. Bevorzugt sollte dabei vorgesehen sein, dass die Isolationsanordnung ein erstes sowie ein zweites Teilelement aufweist. Darüber hinaus kann die Isolationsanordnung auch noch weitere Teilelemente aufweisen. Bevorzugt sollten sowohl das erste als auch das zweite Teilelement elektrisch isolierende Eigenschaften aufweisen, so dass jedes Teilelement für sich auch einer Potentialtrennung, beispielsweise eines Phasenleiters gegenüber einer stützenden Vorrichtung/einem Tragelement, die/das beispielsweise eine durch das Isolationssystem zu verschließende Öffnung aufweist, sicherstellt. Zwischen den beiden Teilelementen sollte bevorzugt ein Fügespalt ausgebildet sein, so dass jedes der beiden Teilelemente für sich, unabhängig vom jeweils anderen Teilelement, scheibenförmig eine Grundfläche überspannt. Somit besteht die Möglichkeit, dass jedes Teilelement unabhängig vom jeweils anderen Teilelement einem Verschließen einer Öffnung dient. Durch ein Zusammenfügen der Isolationsanordnung aus einem ersten und einem zweiten Teilelement besteht die Möglichkeit, die Formgebung der Isolationsanordnung abzuwandeln. So kann beispielsweise vorgesehen sein, dass die beiden Teilelemente identisch ausgeformt sind und einander in ihrer mechanischen Stabilisierung unterstützen. Es kann jedoch auch vorgesehen sein, dass die beiden Teilelemente abweichend voneinander ausgestaltet sind. Somit kann beispielsweise eine baukastenartige Zusammenstellung der Isolationsanordnung vorgenommen werden. Je nach Bedarf können so beispielsweise Teilelemente mit besonderen Oberflächenstrukturen, beispielsweise mit einer Verrippung oder einer besonderen Oberflächengüte kombiniert werden. So besteht beispielsweise die Möglichkeit, die Isolationsanordnung derart einzusetzen, dass das erste Teilelement, beispielsweise einem ersten Medium ausgesetzt ist und das zweite Teilelement einem zweiten Medium ausgesetzt ist. Dabei können das erste und das zweite Medium auch gleichartig sein. Es kann jedoch auch vorgesehen sein, dass die Medien voneinander abweichen. Entsprechend können die Medien z. B. unterschiedliche Aggressivitäten aufweisen. So besteht die Möglichkeit, jedes der Teilelemente auf das auf sie einwirkende Medium ausgerichtet auszulegen. So können beispielsweise aggressive Zerfallsprodukte an einem Teilelement angreifen, wohingegen am anderen Teilelement beispielsweise eine besondere Oberflächengüte vonnöten sein kann, um ein Anhaften des dortigen Mediums zu verhindern.

Weiterhin besteht durch die Verwendung von Teilelementen an der Isolationsanordnung die Möglichkeit, zunächst jedes der Teilelemente für sich zu montieren und in einem späteren Schritt diese Teilelemente im bereits teilmontierten Zustand zu einem Isolationssystem zusammenzufügen. Dadurch kann eine Montage erleichtert werden, da beispielsweise Hilfskonstruktionen während der Montage nicht von Nöten sind und jedes der Teilelemente unmittelbar vormontiert bzw. verschiedenen Baugruppen zugeordnet werden kann. Die Isolationsanordnung des Isolationssystems kann eine fluiddichte Barriere darstellen. Dabei können die Teilelemente Bestandteile verschiedener fluiddichter Barrieren sein. Somit ist es beispielsweise möglich, einen Aufnahmeraum für ein Fluid zu verschließen und mit einem Fluid vorzubefüllen. Entsprechend können verschiedene vorbefüllte Bausteine unter Vervollständigung der Isolationsanordnung zusammengesetzt werden. Im Servicefall kann vorgesehen sein, dass eine Auftrennung der Isolationsanordnung vorgenommen wird. Die fluiddichte Barriere kann an zumindest einem der Aufnahmeräume aufrecht erhalten werden. Die Teilelemente können dabei beispielsweise gleichartig ausgeformt sein. Bei einer asymmetrischen Formgebung können die Teilelemente bevorzugt gegensinnig zueinander ausgerichtet sein, so dass im Zusammenspiel im Isolationssystem eine gegensinnige Lage von erstem und zweiten Teilelement erfolgt.

Die Isolationsanordnung kann dabei von einem Phasenleiter, welcher dem Führen eines elektrischen Stromes bzw. einem Beaufschlagen mit erhöhter Spannung ausgesetzt ist, durchsetzt sein. Dabei kann jedes Teilelement für sich jeweils von dem Phasenleiter durchsetzt sein. Insbesondere kann jedes der Teilelemente den Phasenleiter vollständig umgreifen. Der Phasenleiter kann in unterschiedliche Abschnitte unterteilt sein. Der Phasenleiter kann in jedes der Teilelemente fluiddicht eingebettet sein. Es kann auch vorgesehen sein, dass mehrere Phasenleiter ein und dasselbe Teilelement bzw. die Isolationsanordnung durchsetzen. Ein Teilelement bzw. die Isolationsanordnung kann eine fluiddichte Barriere darstellen.

Die Verbindung der beiden Teilelemente kann zu einem Entstehen eines Fügespaltes zwischen den beiden Teilelementen führen. Der Fügespalt sollte analog zu der Isolationsanordnung eine Grundfläche überspannen. Dabei kann sich der Fügespalt im Wesentlichen in der Ebene erstrecken, welche von der Isolationsanordnung überspannt ist bzw. parallel zu dieser Ebene verschoben sein. Somit ist beispielsweise die Möglichkeit gegeben, dass die Isolationsanordnung im Zusammenspiel von erstem und zweitem Teilelement oder jedes Teilelement für sich eine Grundfläche nach Art einer Membran überspannt. So ist es beispielsweise möglich, eine Öffnung von einem oder beiden Teilelementen überspannen zu lassen. Somit besteht die Möglichkeit, mittels des Isolationssystems beispielsweise eine Flanschöffnung in einem Kapselungsgehäuse insbesondere fluiddicht zu verschließen. Durch einen fluiddichten Verschluss ist die Möglichkeit gegeben, einen Aufnahmeraum des Kapselungsgehäuses mit einem elektrisch isolierenden Fluid zu befüllen, welches durch das Kapselungsgehäuse von der Umgebung hermetisch abgeschlossen ist. Als Fluide eignen sich beispielsweise gasförmiges oder flüssiges Schwefelhexafluorid, Stickstoff, Kohlendioxid oder auch andere Fluide, wie Isolieröle oder Isolieresther. Besonders können diese elektrisch isolierenden Fluide unter Überdruck im Innern des Kapselungsgehäuses angeordnet sein, so dass sich deren elektrische Isolationsfestigkeit zusätzlich erhöht. Somit besteht die Möglichkeit, innerhalb des Aufnahmeraumes Phasenleiter anzuordnen, welche von dem elektrisch isolierenden Fluid umspült sind und den Phasenleiter zumindest abschnittsweise elektrisch isolieren. Durch die Anordnung des Fügespaltes über der überspannten Grundfläche ist weiterhin die Möglichkeit gegeben, den Fügespalt selbst von Dichtelementen freizuhalten. Der Fügespalt erstreckt sich vorteilhaft innerhalb der durch die beiden Teilelemente ausgebildeten Membran. Eine hermetische Barriere der Isolieranordnung, welche zum Aufrechterhalten eines hermetischen Verschlusses eines Kapselungsgehäuses notwendig ist, wird so durch den Fügespalt nicht verletzt. Insbesondere kann vorgesehen sein, dass jedes der Teilelemente für sich eine fluiddichte Barriere über einer Öffnung ausbilden kann, so dass der Fügespalt sich quer zu der überspannten Grundfläche durch die Isolationsanordnung erstreckt. So ist es beispielsweise möglich, Teilelemente nacheinander auszutauschen, wobei die Isolationsanordnung ihre Barrierewirkung z. B. durch Verbleib eines der Teilelemente zumindest teilweise aufrechterhalten kann. Der Fügespalt kann dabei verschiedenartig profiliert sein. Es kann vorgesehen sein, dass der Fügespalt zwischen parallelen Wandabschnitten der beiden Teilelemente begrenzt ist. Der Fügespalt kann beispielsweise einen ebenen Verlauf aufweisen. Es kann jedoch auch vorgesehen sein, dass der Fügespalt verschiedenartige räumliche Ausdehnungen aufweist.

Dabei kann vorteilhaft vorgesehen sein, dass zwischen dem ersten und dem zweiten Teilelement eine, insbesondere fluiddicht abschließbare Kavität angeordnet ist.

Eine Anordnung einer fluiddicht abschließbaren Kavität zwischen den Teilelementen gestattet es, die Kavität beispielsweise mit einem bevorzugten Isoliermedium, wie beispielsweise einem Druckgas oder einer Isolierflüssigkeit zu befüllen. Bevorzugt kann die Befüllung der Kavität mit einem Medium erfolgen, welches beispielsweise auch in einem Aufnahmeraum befindlich ist, welcher von dem Isolationssystem zumindest abschnittsweise begrenzt ist. Dadurch ist eine Möglichkeit gegeben, die Isolationsfestigkeit auch in den zwischen den Teilelementen befindlichen Fügespalt/der Kavität zu verbessern. So kann beispielsweise auch vorgesehen sein, dass der Fügespalt beispielsweise Teil eines hermetisch abgeschlossenen Aufnahmeraumes ist. Weiter kann die Kavität selbst einen abgeschlossenen Aufnahmeraum bilden, oder die Kavität kann über einen oder mehrere Kanäle mit einem oder mehreren weiteren Aufnahmeräumen kommunizierend, verbunden sein. Die Kavität kann sich innerhalb des Fügespaltes lediglich abschnittsweise erweitern. Beispielsweise kann der Fügespalt sich zwischen im Wesentlichen parallelen Wandflächen der Teilelemente erstrecken, wobei lediglich ein Teilbereich sich zur Bildung einer Kavität erweitert. Zur Bildung einer Kavität können die die Kavität begrenzenden Wandflächen verschieden von einer parallelen Lage sein. Zumindest eine, insbesondere zwei der Wandflächen können gekrümmt, insbesondere konkav gekrümmt, ausgeformt sein. Insbesondere können Wandflächen zur Bildung einer Kavität gegensinnig konkav ausgeformt sein.

Die Verwendung eines Fluidkanals ermöglicht es, den Fügespalt, insbesondere wenn dieser eine Kavität aufweist, mit zumindest einem weiteren Aufnahmeraum zu verbinden. Der weitere Aufnahmeraum kann ein benachbartes Fluidvolumen begrenzen bzw. aufnehmen. Eine Schaltbarkeit des Fluidkanals gestattet es, den Zeitpunkt einer Kommunikation des Fügespaltes mit einem weiteren Aufnahmeraum variabel festzulegen und gegebenenfalls auch wieder aufzuheben. So kann beispielsweise der Fügespalt mit einem Fluidvolumen verbunden sein, welches hinsichtlich seiner Qualität überwacht wird. Sobald der Fügespalt an dieses überwachte Aufnahmevolumen angeschlossen ist, kann auch eine Überwachung des Zustandes des Fügespaltes bzw. des im Fügespalt befindlichen Fluids erfolgen. Der schaltbare Fluidkanal sollte dabei eine fluiddichte Barriere zumindest eines Teilelementes durchsetzen.

Eine weitere vorteilhafte Ausgestaltung kann vorsehen, dass der schaltbare Fluidkanal eine, insbesondere aus radialer Richtung betätigbare Schalteinrichtung aufweist.

Der schaltbare Fluidkanal kann durch eine Schalteinrichtung verdämmt werden, so dass der Fluidkanal blockiert ist und kein Fluid durch den Fluidkanal hindurchströmen kann. Vorteilhafterweise sollte eine Betätigung der Schalteinrichtung des Fluidkanals bevorzugt aus einer radialen Richtung erfolgen, wobei eine radiale Richtung eine Richtung ist, welche quer zur überspannten Grundfläche der scheibenförmigen Isolationsanordnung verläuft. Die axiale Richtung einer Isolationsanordnung ergibt sich aus einer Achse, welche eine fluiddichte Barriere der Isolationsanordnung durchstößt. Es kann vorgesehen sein, eine Schalteinrichtung für den Fluidkanal beispielsweise in eines oder in beide Teilelemente einzubetten, so dass mantelseitig am Umfang der scheibenförmigen Isolationsanordnung ein Betätigungselement für den schaltbaren Fluidkanal angeordnet ist. Zum Schalten des Fluidkanals eignen sich beispielsweise Ventile, die z. B. durch eine Drehbewegung geöffnet und geschlossen werden können.

Eine weitere vorteilhafte Ausgestaltung kann vorsehen, dass zumindest eines der Teilelemente eine konkav ausgekehlte Wandungsfläche aufweist.

Eine konkav ausgekehlte Wandfläche in einem der Teilelemente ermöglicht es, eine Wegstrecke entlang der Oberfläche eines Teilelementes zu vergrößern und/oder das Volumen des Fügespaltes zu vergrößern. Insbesondere können an beiden Teilelementen der Isolationsanordnung konkav ausgekehlte Wandungsflächen vorgesehen sein. Insbesondere sollten diese Auskehlungen an den beiden Teilelementen entgegengesetzt zueinander ausgerichtet angeordnet sein. Somit ist die Möglichkeit gegeben, größere Volumina von Fluiden in den Fügespalt einzulagern. Entsprechend wird eine dielektrische Stabilisierung des Fügespaltes bewirkt. Fertigungstoleranzen können durch eine derartige konkave Auskehlung weiterhin ausgeglichen werden, wobei die Isolationsfestigkeit des Isolationssystems erhalten bleibt.

Eine weitere vorteilhafte Ausgestaltung kann vorsehen, dass zumindest eines der Teilelemente eine Sollbruchstelle aufweist.

Eine Sollbruchstelle in einem der Teilelemente ermöglicht es, beispielsweise eine Druckentlastung in den Fügespalt hinein, insbesondere wenn der Fügespalt eine Kavität aufweist, zu ermöglichen. So kann beispielsweise vorgesehen sein, dass bei einem Überdruck und einem Zerbersten eines der Teilelemente unter dem Überdruck ein zusätzliches Volumen (im Fügespalt/ der Kavität) zur Aufnahme von Fluid zur Verfügung steht. Ein Verflüchtigen von in den Fügespalt einströmendem Fluid wird verhindert. Analog kann bei einem Auftreten eines Überdruckes im Fügespalt bzw. in der Kavität eine Druckentlastung über eine Sollbruchstelle in einem benachbarten Aufnahmeraum erfolgen. Die Sollbruchstelle kann beispielsweise durch eine zumindest bereichsweise reduzierte Wandstärke eines Teilelements realisiert werden. Beispielsweise können in einer Scheibenfläche eines Teilelementes der Isolationsanordnung Nuten oder sacklochartige Ausnehmungen vorgesehen sein, um die Wandstärke des Teilelementes zu reduzieren. Im Bereich der Sollbruchstelle weist die fluiddichte Barriere innerhalb eines Teilelementes eine mechanische Schwächung auf, so dass eine Zerstörung bevorzugt in diesem Bereich eingeleitet wird.

Vorteilhafterweise kann weiter vorgesehen sein, dass zumindest eines der Teilelemente, insbesondere beide Teilelemente von einem Phasenleiter durchsetzt ist/sind.

Die beiden Teilelemente bzw. die Isolationsanordnung weisen eine scheibenförmige Struktur auf. Eine Scheibe ist ein Element, welches quer zu einer Achse eine Barriere darstellt. Eine Scheibe ist beispielsweise ein im Wesentlichen rotationssymmetrisches Element, wobei eine axiale Richtung der Isolationsanordnung bzw. der Teilelement durch eine Rotationsachse definiert ist. Die axiale Richtung durchsetzt eine Scheibenfläche des Teilelementes. Eine Scheibe kann eine fluiddichte Barriere darstellen. Die Scheibe kann jedoch auch permanent oder vorübergehend Öffnungen aufweisen, durch welche ein Fluid strömen kann. Darüber hinaus können auch weitere rotationssymmetrische Formen für die Teilelemente bzw. die scheibenförmige Isolationsanordnung genutzt werden, wobei die Rotationsachse dabei die axiale Richtung definiert. Insbesondere kann die Isolationsanordnung eine ringförmig umlaufende Mantelfläche aufweisen, welche die axiale Richtung umgreift.

Ein Phasenleiter dient einer Übertragung eines elektrischen Stromes zwischen zwei Punkten. Phasenleiter sind dazu mit einer Spannung zu beaufschlagen, welche einen elektrischen Strom treibt. Die Phasenleiter durchsetzen die Isolationsanordnung in axialer Richtung, d. h., der Phasenleiter ist zumindest in einem Abschnitt von der Isolationsanordnung umgriffen, so dass über die Isolationsanordnung eine Beabstandung des Phasenleiters zu weiteren Bauteilen, die ein abweichendes elektrisches Potentials führen, gewährleistet ist. Dabei kann der Phasenleiter in verschiedene Abschnitte unterteilt sein, wobei verschiedene Abschnitte jeweils das erste oder das zweite Teilelement durchsetzen.

Weiterhin kann vorteilhaft vorgesehen sein, dass im Fügespalt zwischen den Teilelementen ein Fügespalt des Phasenleiters angeordnet ist.

Ein Phasenleiter kann aus verschiedenen Abschnitten zusammengesetzt sein. Diese Abschnitte sind miteinander entsprechend elektrisch zu kontaktieren, um im Phasenleiter einen durchgängigen Strompfad in axialer Richtung vor sowie hinter dem Isolationssystem zu gewährleisten. Eine Verbindung von Abschnitten des Phasenleiters im Fügespalt weist den Vorteil auf, dass diese Unstetigkeitsstelle im Phasenleiter in einem separierten Raum angeordnet ist. Dort kann dieser zum einen mechanisch vor äußeren Eingriffen geschützt angeordnet sein. Zum anderen kann dieser Bereich auch einer besonderen elektrischen Isolation unterzogen werden. So ist ein fluiddichtes Einbetten des Phasenleiters in ein Teilelement in vereinfachter Weise möglich.

Erfindungsgemäß ist bei einem Montageverfahren eines Isolationssystems, welches eine im Wesentlichen scheibenförmige, eine Grundfläche überspannende elektrisch isolierenden Isolationsanordnung aufweist, vorgesehen, dass
- mit einem ersten Teilelement zumindest teilweise eine Schnittstellenöffnung eines ersten Kapselungsgehäuses verschlossen wird,
- mit einem zweiten Teilelement zumindest teilweise eine Schnittstellenöffnung eines zweiten Kapselungsgehäuses verschlossen wird,
- die Schnittstellenöffnungen aufweisende Schnittstellen der beiden Kapselungsgehäuse miteinander verbunden werden,
- nach Verbindung der Kapselungsgehäuse ein Fluidkanal eröffnet wird, über welchen ein Fluid aus einem Aufnahmeraum eines der Kapselungsgehäuse in einen Fügespalt zwischen den Teilelementen strömt.

Ein Kapselungsgehäuse ist ein Gehäuse, in welches eine Schnittstellenöffnung, beispielsweise in Form einer Flanschöffnung aufweist. Diese Schnittstellenöffnung ist von einem Isolationssystem zu überspannen. Wird nunmehr ein erstes Teilelement eingesetzt, um eine Schnittstellenöffnung zumindest teilweise an einem ersten Kapselungsgehäuse zu verschließen und wird ein zweites Teilelement genutzt, um zumindest teilweise eine Schnittstellenöffnung eines zweiten Kapselungsgehäuses zu verschließen, so ist das Isolationssystem dazu geeignet, zwei Öffnungen an zwei Kapselungsgehäusen zu verschließen, wobei jeder Aufnahmeraum, in welchem die jeweilige Schnittstellenöffnung des jeweiligen Kapselungsgehäuses mündet, von einem Teilelement der Isolationsanordnung verschlossen ist. Somit besteht auch vor einem Zusammenfügen des ersten und des zweiten Kapselungsgehäuses die Möglichkeit, Aufnahmeräume des ersten sowie des zweiten Kapselungsgehäuses bereits mit einem unter Überdruck stehenden Fluid zu befüllen. Somit können beispielsweise teilmontierte Kapselungsgehäuse hergestellt werden, welche zu einem späteren Zeitpunkt zusammengefügt werden. Durch ein Befüllen der Aufnahmeräume mit einem Fluid ist ein Verschmutzen derselben verhindert. Insbesondere bei einem Beaufschlagen eines Aufnahmeraumes eines Kapselungsgehäuses mit Überdruck ist eher ein Entweichen des unter Überdruck stehenden Fluids möglich, als ein Eindringen von Fremdkörpern in den Aufnahmeraum der Kapselungsgehäuse. Die befüllten Aufnahmeräume können bereits vor einer Auslieferung zu einem Montageort vorgeprüft werden.

Beispielsweise kann die Dichtigkeit der fluiddichten Barriere geprüft werden oder auch eine Spannungsprüfung vorgenommen werden. Weiter kann während der Vormontage das jeweilige Teilelement genutzt werden, um beispielsweise einen Abschnitt des Phasenleiters zu positionieren.

Zu einem späteren Zeitpunkt können dann die beiden Kapselungsgehäuse miteinander verbunden werden, so dass eine Komplettierung des Isolationssystemes erfolgt. Somit ist eine Möglichkeit gegeben, die beiden Kapselungsgehäuse miteinander zu verbinden, wobei über das Isolationssystem eine Separation bzw. Trennung von Aufnahmeräumen im ersten sowie im zweiten Kapselungsgehäuse gegeben sein kann. Beispielsweise kann nach einem Verbinden der beiden Kapselungsgehäuse eine Druckerhöhung in den Aufnahmeräumen der Kapselungsgehäuse vorgesehen sein.

Vorteilhaft kann weiter vorgesehen sein, dass die die Schnittstellenöffnungen aufweisenden Schnittstellen der beiden Kapselungsgehäuse unter Zwischenlage der Teilelemente aufweisenden Isolationsanordnung miteinander verbunden werden.

Bei Zwischenlage des Isolationssystems ist die Möglichkeit gegeben, zusätzliche Verspannkräfte auf das Isolationssystem aufzubringen. Das Isolationssystem kann nach einem Verbinden der Schnittstellen mit jeder der beiden Schnittstellen in Verbindung stehen. Somit kann auch eine verbesserte Verspannung der Teilelemente erzielt werden. Beispielsweise kann das Isolationssystem in ein Flanschverbund der Kapselungsgehäuse eingelegt sein. Als Flanschverbund können verschiedene Flanschformen zum Einsatz gelangen. So können beispielsweise ebene Ringflansche Verwendung finden. Weiter können auch Flansche mit einer (Ring-)Schulter eingesetzt werden. Durch die Schulter ist die Möglichkeit gegeben, die Isolationsanordnung außenmantelseitig zu schützen.

Wird nach einer Verbindung der Kapselungsgehäuse ein Fluidkanal eröffnet, so kann der Fügespalt zwischen den beiden Teilelementen mit einem Fluid aus einem der Aufnahmeräume, welches durch den Fluidkanal hindurchströmt, befüllt werden. Somit ist der Fügespalt zwischen den Teilelementen mit einem der Aufnahmeräume verbunden und kann über diese überwacht werden. Weiterhin ist dadurch die Möglichkeit gegeben, dass über die Isolationsanordnung sowohl der Aufnahmeraum des ersten Kapselungsgehäuses als auch der Aufnahmeraum des zweiten Kapselungsgehäuses über den dazwischenliegenden Spalt miteinander in Verbindung stehen. Somit wird die dielektrische Stabilität der Isolationsanordnung im Verbund der beiden Kapselungsgehäuse stabilisiert.

Weiterhin ermöglicht die Füllung des Fügespaltes nach einer Verbindung der Kapselungsgehäuse die Möglichkeit, in einfacher Weise den Fügespalt mittelbar über einen Aufnahmeraum zu befüllen. Nachträgliches Befüllen über separate Füllvorrichtungen etc. für den Fügespalt sind so vermieden.

Eine weitere vorteilhafte Ausgestaltung kann vorsehen, dass ein Phasenleiter einen ersten Abschnitt und einen zweiten Abschnitt aufweist, wobei der erste Abschnitt das erste Teilelement durchsetzt und der zweite Abschnitt das zweite Teilelement durchsetzt und während/nach einem Zusammenfügen der Kapselungsgehäuse die Abschnitte einander elektrisch leitend verbunden werden.

Ein Phasenleiter dient einer Übertragung einer elektrischen Energie. Durch eine Auftrennung eines Phasenleiters in einem ersten Abschnitt und einem zweiten Abschnitt ist die Möglichkeit gegeben, jedem der beiden Abschnitte einen der Teilelemente zuzuordnen und diesen in das jeweilige Teilelement einzubetten. Entsprechend kann bereits während einer Montage eines Teilelementes an einem der beiden Kapselungsgehäuse auch eine Positionierung des jeweils zugeordneten Abschnittes eines Phasenleiters vorgesehen sein. Indem man während bzw. nach dem Zusammenfügen der Kapselungsgehäuse die Abschnitte kontaktiert, wird ein durchgängiger Strompfad durch die Isolationsanordnung hindurch hergestellt. Bevorzugt kann eine Kontaktierung der Abschnitte durch ein Aufeinanderpressen bzw. Ineinanderstecken der Abschnitte vorgenommen werden. So kann eine dauerhaft elastische Verbindung zwischen den beiden Abschnitten hergestellt werden, die gegebenenfalls auch aufgrund thermischer Wirkungen auftretende Dimensionsänderungen ausgleichen kann.

Dabei kann vorgesehen sein, dass beispielsweise ein einzelner Phasenleiter jeweils zentrisch in der scheibenförmigen Isolationsanordnung angeordnet ist. Es kann jedoch auch vorgesehen sein, dass mehrere Phasenleiter in ein und derselben Isolationsanordnung angeordnet sind, wobei diese die Isolationsanordnung unabhängig voneinander durchsetzen und über die Isolationsanordnung sowohl untereinander elektrisch isoliert positioniert sind, als auch gegenüber einer abstützenden Einheit wie ein Kapselungsgehäuse elektrisch isoliert abgestützt sind.

Im Folgenden wird in einer Zeichnung ein Ausführungsbeispiel der Erfindung schematisch gezeigt und nachfolgend näher beschrieben. Dabei zeigt die
- Figur 1: ein Isolationssystem, bei welchem auf die Nutzung eines erfindungsgemäßen schaltbaren Fluidkanales verzichtet ist, im unmontierten Zustand, die
- Figur 2: einen Zwischenschritt während einer Montage des Isolationssystems, die
- Figur 3: das Isolationssystem mit einem erfindungsgemäßen schaltbaren Fluidkanal im montierten Zustand, die
- Figur 4: einen Schnitt durch eine Ausführungsvariante eines Isolationssystems im montierten Zustand, die
- Figur 5: eine erste Außenansicht, die
- Figur 6: eine zweite Außenansicht in alternativer Ausgestaltung und die
- Figur 7: eine Nutzung des Isolationssystems, bei welchem auf die Nutzung eines erfindungsgemäßen schaltbaren Fluidkanales verzichtet ist, in einer alternativen Flanschverbindung.

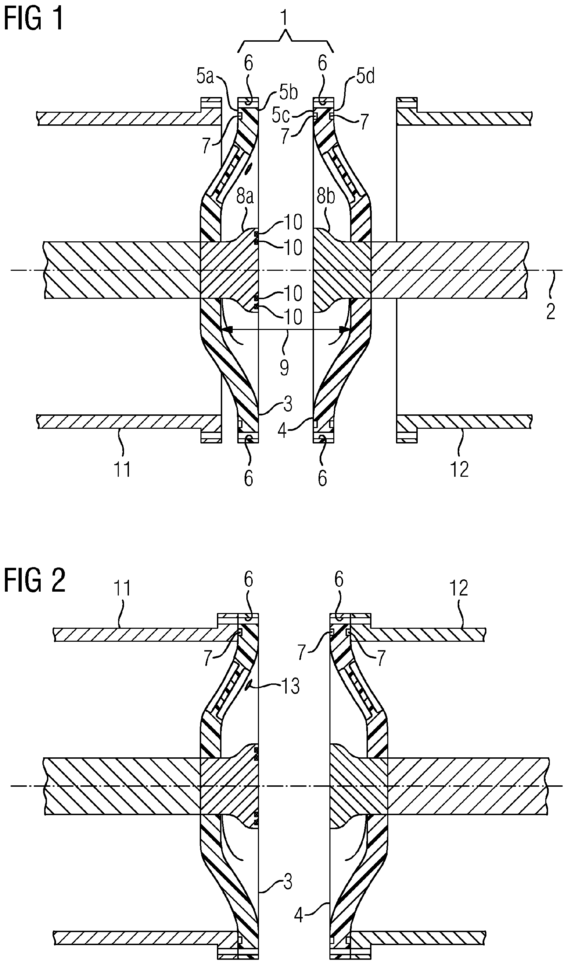

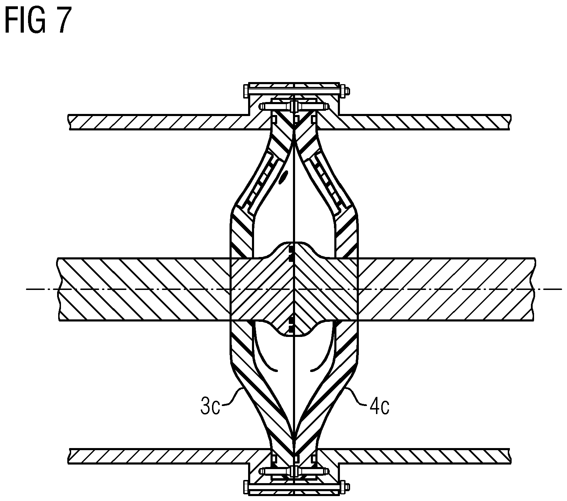

Die Figur 1 zeigt ein Isolationssystem im unmontierten Zustand. Das Isolationssystem weist eine scheibenförmige Isolationsanordnung 1 auf. Die scheibenförmige Isolationsanordnung ist dabei im Wesentlichen rotationssymmetrisch ausgeformt, wobei die Rotationsachse eine Längsachse 2 definiert. Die Längsachse 2 durchstößt eine insbesondere ebene Grundfläche, insbesondere im Wesentlichen lotrecht, welche von der Isolationsanordnung 1 überspannt ist. Die scheibenförmige Isolationsanordnung 1 weist ein erstes Teilelement 3 sowie ein zweites Teilelement 4 auf. Die beiden Teilelemente 3, 4 sind elektrisch isolierende Feststoffisolatoren. Die beiden Teilelemente 3, 4 sind annähernd gleichartig ausgeformt, wobei die beiden Teilelemente 3, 4 koaxial zueinander und zur Längsachse 2 liegen. Die Teilelemente 3, 4 weisen dabei eine im Wesentlichen kreisförmige Außenkontur auf, so dass eine außenseitige Zylindermantelfläche gebildet ist. Vorliegend wird auf ein Verwenden eines die Teilelemente 3, 4 außenmantelseitig umgreifenden zusätzlichen Rahmenelementes verzichtet. Ein derartiges Rahmenelement kann von Vorteil sein, um die beiden Teilelemente 3, 4 vor mechanischen Beanspruchungen zu schützen. Die Funktion des Rahmenelementes kann beispielsweise in einen Flansch bzw. in ein Gehäuse integriert sein (vgl. Fig. 7). Jedes der beiden Teilelemente 3, 4 weist an seinem äußeren Umfang jeweils ringförmige Flanschflächen 5a, 5b, 5c, 5d auf. Diese Flanschflächen 5a, 5b, 5c, 5d könnten beispielsweise auch in ein die beiden Teilelemente 3, 4 jeweils umgebendes Rahmenelement integriert sein, so dass Flanschkräfte von den beiden Teilelementen 3, 4 ferngehalten werden. Ein derartiges Rahmenelement kann beispielsweise ein metallischer Rahmen sein. Die Flanschflächen 5a, 5b, 5c, 5d sind ringförmig ausgebildet und laufen koaxial zur Längsachse 2 an den beiden Teilelementen 3, 4 um. In den Flanschflächen 5a, 5b, 5c, 5d liegen Durchgangsöffnungen 6, mittels welcher ein Verbolzen der beiden Teilelemente 3, 4 untereinander und gegenüber weiteren Flanschflächen ermöglicht ist. Weiter sind in den Flanschflächen 5a, 5c, 5d ringförmige Nuten 7 eingebracht, in welche beispielsweise Dichtelemente z. B. O-Ringe eingelegt werden können, so dass ein fluiddichter Verbund zwischen den Flanschflächen 5a, 5c, 5d und einer jeweils gegengleich anliegenden Flanschfläche ermöglicht ist. Zentrisch sind die beiden Teilelement 3, 4 von einem Phasenleiter durchsetzt, der in einen ersten Abschnitt 8a sowie einen zweiten Abschnitt 8b unterteilt ist. Die beiden Abschnitte 8a, 8b des Phasenleiters durchsetzen das erste bzw. das zweite Teilelement 3, 4 fluiddicht. Beispielhaft ist hier eine Durchführung mit einem einzigen zentrisch angeordneten Phasenleiter gezeigt. Es kann jedoch auch vorgesehen sein, dass mehrere Phasenleiter in jedem der beiden Teilelemente 3, 4 der scheibenförmigen Isolationsanordnung eingebettet sind. Jedes der beiden Teilelemente 3, 4 ist dabei mit einer Wölbung versehen, so dass die durch die jeweiligen Flanschflächen 5a, 5b, 5c, 5d gebildeten Flanschebenen von dem Wandungen des ersten bzw. zweiten Teilelementes 3, 4 durchbrochen sind. Somit entsteht jeweils ein ausgebauchtes erstes und zweites Teilelement 3, 4, wobei die einander zugewandten Seiten von erstem und zweitem Teilelement 3, 4 gegensinnig konkav ausgekehlte Wandungsflächen aufweisen, so dass ein zwischen den beiden Teilelementen 3, 4 nach einem Verspannen derselben gebildeter Fügespalt 9 eine sich erweiternde Kavität aufweist.

Die beiden Abschnitte 8a, 8b des Phasenleiters durchsetzen jeweils konkav liegende Wandungsflächen und ragen bis in die Ebene einer Flanschfläche 5b, 5c hinein. Zumindest in einem der beiden Abschnitte 8a, 8b des Phasenleiters sind Ausnehmungen 10 zur Aufnahme von federelastischen Kontaktelementen angeordnet. Eine oder mehrere Ausnehmungen 10 können jeweils nur in einem der beiden Abschnitte 8a, 8b des Phasenleiters angeordnet sein. Es kann jedoch auch vorgesehen sein, dass zumindest in einem der beiden Abschnitten 8a, 8b des Phasenleiters eine oder mehrere Ausnehmungen 10 angeordnet sind. Auf der konkav ausgekehlten Seite in der jeweiligen Scheibenfläche schließen die Abschnitte 8a, 8b jeweils bündig mit einer Ebene einer Flanschfläche 5b, 5c ab.

Die scheibenförmige Isolationsanordnung 1 des Isolationssystemes ist vorgesehen, um in eine Flanschverbindung zwischen einem ersten Kapselungsgehäuse 11 und einem zweiten Kapselungsgehäuse 12 eingefügt zu werden. Die beiden Kapselungsgehäuse 11, 12 sind in der Figur 1 schematisiert dargestellt. Jedes der beiden Kapselungsgehäuse 11, 12 verfügt über eine Flanschfläche, die dimensionsgleich mit Flanschflächen 5a, 5d der beiden Teilelemente 3, 4 der Isolationsanordnung 1 in Anlage gebracht werden können. Die beiden Kapselungsgehäuse 11, 12 sind dabei bevorzugt als metallische Kapselungsgehäuse ausgebildet, die eine fluiddichte Barriere darstellen, um in ihrem jeweiligen im Innern eingeschlossenen Aufnahmeraum ein elektrisch isolierendes Fluid hermetisch gekapselt aufzunehmen. Dabei dient die scheibenförmige Isolationsanordnung jeweils einem Verschließen einer Schnittstellenöffnung jeweils einer Schnittstelle in dem ersten bzw. zweiten Kapselungsgehäuse 11, 12.

Die Figur 2 zeigt einen Zwischenmontagezustand, bei welchem das erste Teilelement 3 winkelstarr mit dem ersten Kapselungsgehäuse 11 verbunden ist und das zweite Teilelement 4 winkelstarr mit dem zweiten Kapselungsgehäuse 12 verbunden ist. Dabei ist zu erkennen, dass die Durchgangsöffnungen 6 noch frei von Befestigungsmitteln gehalten sind. Zur jeweiligen Positionierung und Festlegung der Teilelemente 3, 4 an dem jeweiligen Flansch des jeweiligen Kapselungsgehäuses 11, 12 sind im Umlauf der Flanschflächen 5a, 5b, 5c, 5d versetzt weitere Ausnehmungen angeordnet, welche ein individuelles Befestigen des jeweiligen Teilelementes 3, 4 an dem jeweiligen Kapselungsgehäuse 11, 12 ermöglicht. So besteht die Möglichkeit, die Schnittstellenöffnungen der Kapselungsgehäuse 11, 12 zu verschließen und die Teilelemente 3, 4 örtlich zu fixieren. Über in den ringförmigen Nuten 7 eingelegte Dichtelemente kann eine entsprechende Dichtwirkung erzielt werden. Nunmehr besteht die Möglichkeit, die Aufnahmeräume für das elektrisch isolierende Fluid im Innern des ersten Kapselungsgehäuses 11 sowie des zweiten Kapselungsgehäuses 12 mit einem Fluid vorzubefüllen. Hierbei sei auch auf einen beispielshaft im ersten Teilelement 3 eingebrachter Kanal 13 hingewiesen. Der Kanal 13 stellt eine dauerhafte Durchbrechung des ersten Teilelementes 3 dar, das sich in diesem Falle ein Befüllen des Aufnahmeraumes des ersten Kapselungsgehäuses 11 nicht anbietet, da ohne Verschluss des Kanals 13 ein Verflüchtigen von im Aufnahmeraum des ersten Kapselungsgehäuses 11 befindlichem Fluid über den Kanal 13 erfolgen kann. Die Position des Kanals 13 soll hier lediglich beispielhaft eine weitere Ausgestaltungsmöglichkeit angeben, wobei auch weitere Teilelemente oder weitere Ausführungen bedarfsweise mit einem derartigen dauerhaft durchlässigen Kanal 13 ausgestattet sein können.

Neben einem (zumindest teilweisen) Verschließen der Aufnahmeräume 11, 13 über das erste bzw. das zweite Teilelement 3, 4 weist eine derartige Montage den Vorteil auf, dass der Phasenleiter mit seinen Abschnitten 8a, 8b gegenüber dem jeweiligen Kapselungsgehäuse 11, 12 bereits positioniert ist. Somit ist ein hilfsweises Abstützen des Phasenleiters nicht notwendig. Weiterhin ist der Phasenleiter im Innern der Kapselungsgehäuse 11, 12 vor beispielsweise mechanischer Beeinflussung weitestgehend geschützt.

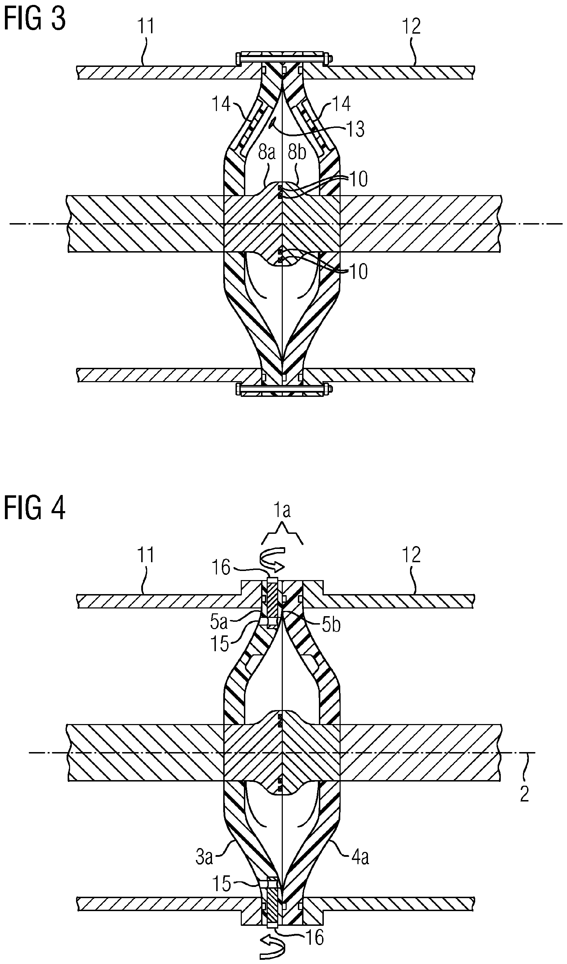

In einem weiteren Montageschritt ist ein Verbolzen der die Schnittstellenöffnungen des ersten und zweiten Kapselungsgehäuses 11, 12 umgebenen Flansche unter Zwischenlage der Isolationsanordnung 1 (welche das erste und des zweite Teilelement 3, 4 aufweist) vorgesehen. Die in der Figur 2 noch frei von jeglichem Verbindungselement gehaltenen Durchgangsöffnungen 6 sind nunmehr (Figur 3) von Bolzen durchsetzt, so dass zusätzlich zu der bereits erfolgten Verflanschung jedes einzelnen Teilelementes 3, 4 mit jeweils einem Kapselungsgehäuse 11, 12 ein gesamtes Verflanschen der Kapselungsgehäuse 11, 12 unter Zwischenlage der Teilelemente 3, 4 der scheibenförmigen Isolationsanordnung 1 gewährleistet ist. Nunmehr ist auch der sich einstellende Fügespalt 9 über ein in der entsprechenden ringförmigen Nut 7 eingelegtes Dichtelement abgedichtet. Der Fügespalt 9 erstreckt sich zentrisch beidseitig konvex gewölbt im Innern der Isolationsanordnung 1. Eine linsenförmige Kavität ist dabei über den Kanal 13 mit dem Aufnahmeraum des ersten Kapselungsgehäuses 11 verbunden. Das zweite Kapselungsgehäuse 12 bzw. dessen Aufnahmeraum ist vom Aufnahmeraum des ersten Kapselungsgehäuses 11 sowie von der Kavität im Innern der Isolationsanordnung 1 separiert. Die beiden Abschnitte 8a, 8b des Phasenleiters sind aufgrund der Verpressung der Kapselungsgehäuse 11, 12 und der Teilelemente 3, 4 gegeneinander gepresst, wobei im Bereich der Ausnehmungen 10 entsprechende Kontaktelemente zwischengelegt sind. Dies können beispielsweise Kontaktfedern oder Kontaktfinger sein, so dass ein stromtragfähiger Übergang zwischen den beiden Abschnitten 8a, 8b des Phasenleiters gegeben ist. Über diese Kontaktelemente können auch Wärmedehnungen kompensiert werden. Weiterhin ist in jedem der beiden Teilelemente 3, 4 eine Sollbruchstelle 14 angeordnet. Die Sollbruchstellen 14 sind in Form einer wandstärkereduzierten Zone ausgeformt, so dass bei einer zu großen Druckdifferenz zwischen den über die Isolationsanordnung 1 separierten Aufnahmeräumen bzw. zu der Kavität im Innern der Isolationsanordnung 1 durch Zerbersten der Barriere eines Teilelementes 3, 4 eine Entlastung auftritt. Beispielsweise kann bei einem Überdruck im Aufnahmeraum des zweiten Kapselungsgehäuses 12 eine Druckentlastung in die Kavität der scheibenförmigen Isolationsanordnung und über den Kanal 13 weiter folgend in den Aufnahmeraum des ersten Kapselungsgehäuses 11 erfolgen. Analog kann auch bei einem Auftreten eines Überdruckes in der Kavität eine Druckentlastung in einen der Aufnahmeräume durch ein Bersten einer Sollbruchstelle 14 erfolgen.

Als Alternative zur Verwendung eines Kanals 13 in einem der Teilelemente 3, 4 (oder beiden Teilelementen 3, 4) ist in der Figur 4 abweichend die Verwendung eines schaltbaren Fluidkanals 15 vorgesehen. In einem der Teilelemente 3a der alternativ ausgeführten scheibenförmigen Isolationsanordnung 1a nach Figur 4 ist eine sich axial zur Längsachse 2 erstreckende Durchgangsöffnung angeordnet. Diese Durchgangsöffnung ist im Bereich von Flanschflächen 5a, 5b des entsprechenden Teilelementes 3a, 4a vorgesehen. Dabei sind am ersten Teilelement 3a im Schnitt zwei schaltbare Fluidkanale 15 dargestellt, so dass der zum Überströmen von Fluid aus einem Aufnahmeraum des ersten Kapselungsgehäuses 11 zur Verfügung stehende Querschnitt vergrößert ist. Zum Schalten der schaltbaren Fluidkanäle 15 ist jeweils eine drehbare Welle 16 vorgesehen, die aus radialer Richtung bezüglich der Längsachse 2 den Randbereich mit den Flanschflächen 5a, 5b, 5c, 5d des ersten Teilelements 3a durchsetzt. Die drehbaren Wellen 16 ragen jeweils in einen schaltbaren Fluidkanal 15 hinein und sind in dem Abschnitt, in welchen die drehbaren Wellen den jeweiligen schaltbaren Fluidkanal 15 passieren mit einer radial zur Drehachse der drehbaren Wellen 16 liegenden Durchgangsbohrung versehen. Diese Durchgangsbohrung weist in etwa den Querschnitt des zu schaltenden Fluidkanals 15 auf. Durch eine 90° Drehung ist es möglich, den jeweiligen schaltbaren Fluidkanal 15 freizugeben (siehe Fig. 4). Bei weiterer Drehung um 90° wird der jeweilige schaltbare Fluidkanal 15 von den Mantelflächen der jeweiligen Welle 16 gesperrt.

In der Figur 4 sind die bereits geöffneten schaltbare Fluidkanäle 15 erkennbar. Die Nutzung eines schaltbaren Fluidkanals 15 weist den Vorteil auf, dass während einer Verbindung der beiden Teilelemente 3a, 4a mit einem Flansch der jeweiligen Schnittstellenöffnung des ersten bzw. zweiten Kapselungsgehäuses 11, 12 jeweils ein fluiddichter Verschluss der jeweiligen Schnittstellenöffnung ermöglicht ist. Entsprechend können die Aufnahmeräume sowohl des ersten als auch des zweiten Kapselungsgehäuses 11, 12 mit einem Fluid vorbefüllt werden. Nach erfolgter Verflanschung des ersten und des zweiten Kapselungsgehäuse 11, 12 kann durch ein Öffnen der durch die drehbaren Wellen 16 gebildeten Ventile in den schaltbaren Fluidkanälen 15 ein Überströmen eines Fluides von dem Aufnahmeraum des ersten Kapselungsgehäuses 11 in die Kavität/den Fügespalt 9 zwischen den Teilelementen 3a, 4a der scheibenförmigen Isolationsanordnung 1a erfolgen. Entsprechend ist auch die Kavität mit einem gegebenenfalls unter Überdruck stehenden Fluid befüllt.

In der Figur 4 ist die Schnittebene derart gewählt, das Ausnehmungen zur Aufnahme von Bolzen zum Verflanschen der einzelnen Teilelemente gerade nicht geschnitten sind, um einen Schnitt durch die drehbaren Wellen 16 abbilden zu können.

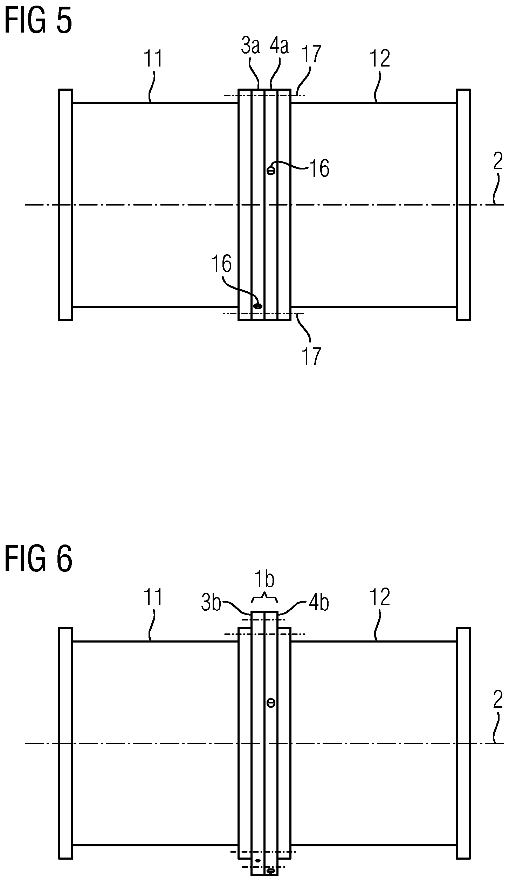

Die Figur 5 zeigt beispielhaft eine Ausbildungsvariante einer Verflanschung des ersten sowie des zweiten Kapselungsgehäuses 11, 12. Dabei ist erkennbar, dass die Flanschflächen 5a, 5b, 5c, 5d der Teilelemente 3a, 4a dimensionsgleich mit den Flanschflächen der die Schnittstellenöffnungen des ersten bzw. des zweiten Kapselungsgehäuses 11, 12 begrenzenden Flansche sind. Somit ist eine in Achsrichtung 2 fluchtende deckungsgleiche Flanschverbindung gebildet. Die Kreisbahn, auf welcher die einzelnen Verspannelemente angeordnet sind, ist dabei in allen Flanschflächen gleich. Dies ist durch die strichpunktierten Linien 17 angedeutet. Lediglich in Umfangsrichtung liegt ein Versatz der einzelnen Verspannelemente vor, so dass jedes der Teilelemente 3, 3a, 4, 4a individuell in dem jeweils zugehörigen Kapselungsgehäuse 11, 12 verflanschbar ist und darüber hinaus die Kapselungsgehäuse 11, 12 unter Zwischenlage der scheibenförmigen Isolationsanordnung 1, 1a verflanschbar sind.

In der Figur 5 ist weiterhin der mantelseitige Zugang aus radialen Richtungen zu den Schalteinrichtungen, welche hier als drehbare Welle 16 ausgeführt wurden, erkennbar. Dabei zeigt die Figur 5, dass in Umfangsrichtung die in den Teilelementen 3a, 4a angeordneten Wellen 16 versetzt zueinander sind. Entsprechend sind in der Figur 4 aufgrund der Lage der Schnittebene lediglich Positionen der drehbaren Wellen 16 des ersten Teilelementes 3a erkennbar. Eine derartige Konstruktion weist den Vorteil auf, dass bedarfsweise der Aufnahmeraum des ersten Kapselungsgehäuses 11 oder der Aufnahmeraum des zweiten Kapselungsgehäuses 12 mit der Kavität/dem Fügespalt im Innern der scheibenförmigen Isolationsanordnung 1a verbindbar ist. Bedarfsweise kann durch ein Öffnen der schaltbaren Fluidkanäle sowohl im ersten Teilelement 3a als auch im zweiten Teilelement 4a auch eine Kommunikation der Aufnahmeräume des ersten Kapselungsgehäuses 11 sowie des zweiten Kapselungsgehäuses 12 zugelassen werden.

Die Figur 6 zeigt eine alternative Ausgestaltungsmöglichkeit einer Flanschverbindung, wobei die dortige Isolationsanordnung 1b einen gegenüber den die Schnittstellenöffnung umgebenden Flansche vergrößerten Querschnitt aufweist. Somit ist die Möglichkeit gegeben, einerseits jedes der Teilelemente 3b, 4b unabhängig mit einem Flansch des ersten oder des zweiten Kapselungsgehäuses 11, 12 zu verbinden und über den vergrößerten Teilkreis die beiden Teilelemente 3b, 4b miteinander zu verflanschen und so das erste sowie das zweite Kapselungsgehäuse 11, 12 winkelstarr zueinander festzulegen. In diesem Fall befindet sich eine Kreisbahn von Befestigungselementen in den Flanschflächen 5a, 5b, 5c, 5d des ersten bzw. zweiten Teilelementes 3b, 4b, um diese jeweils individuell mit dem ersten oder dem zweiten Kapselungsgehäuse 11, 12 zu verbinden. Weiterhin befindet sich in den Flanschflächen 5a, 5b, 5c, 5d eine weitere Kreisbahn, die einen vergrößerten Durchmesser aufweist, mittels welchen eine Zusammenfügung des ersten Teilelementes 3b sowie des zweiten Teilelementes 4b der scheibenförmigen Isolationsanordnung 1b ermöglicht ist, so dass auch das erste und das zweite Kapselungsgehäuse 11, 12 zueinander winkelstarr festgelegt sind.

Figur 7 zeigt eine Fortbildung der aus Figur 3 bekannten Vorrichtung. Abweichend ist eine alternative Flanschverbindung genutzt. Die Flansche weisen jeweils eine außenmantelseitig umlaufende Ringschulter auf. So sind Teilelemente 3c, 4c bündig in einen der Flansche eingelegt. Mantelflächen der Teilelemente 3c, 4c sind von der Ringschulter umgriffen und überdeckt. Zur Befestigung der Teilelemente 3c, 4c ist eine Verschraubung in axialer Richtung mit dem jeweiligen Flansch vorgesehen. Somit sind die Teilelemente in verbesserter Weise mechanisch geschützt.

## Patentansprüche

1. Isolationssystem mit einer elektrisch isolierenden, im Wesentlichen scheibenförmigen Isolationsanordnung (1, 1a, 1b), welche eine Grundfläche überspannt, wobei die Isolationsanordnung (1, 1a, 1b) zumindest ein erstes und ein zweites Teilelement (3, 3a, 3b, 3c, 4, 4a, 4b, 4c) aufweist, zwischen denen ein Fügespalt (9) angeordnet ist, welcher die Grundfläche überspannt,
**dadurch gekennzeichnet, dass** der Fügespalt (9) über einen schaltbaren Fluidkanal (15) mit einem benachbarten Fluidvolumen verbindbar ist.

2. Isolationssystem nach Anspruch 1,
**dadurch gekennzeichnet, dass** zwischen dem ersten und dem zweiten Teilelement (3, 3a, 3b, 3c, 4, 4a, 4b, 4c) eine, insbesondere fluiddicht abschließbare Kavität angeordnet ist.

3. Isolationssystem nach Anspruch 1 oder 2,
**dadurch gekennzeichnet, d a s s** der schaltbare Fluidkanal (15) eine insbesondere aus radialer Richtung betätigbare Schalteinrichtung (16) aufweist.

4. Isolationssystem nach einem der Ansprüche 1 bis 3,
**dadurch gekennzeichnet, dass** zumindest eines der Teilelemente (3, 3a, 3b, 3c, 4, 4a, 4b, 4c) eine konkav ausgekehlte Wandungsfläche aufweist.

5. Isolationssystem nach einem der Ansprüche 1 bis 4,
**dadurch gekennzeichnet, dass** zumindest eines der Teilelemente (3, 3a, 3b, 3c, 4, 4a, 4b, 4c) eine Sollbruchstelle (14) aufweist.

6. Isolationssystem nach einem der Ansprüche 1 bis 5,
**dadurch gekennzeichnet, dass** zumindest eines der Teilelemente (3, 3a, 3b, 3c, 4, 4a, 4b, 4c), insbesondere beide Teilelemente (3, 3a, 3b, 3c, 4, 4a, 4b, 4c) von einem Phasenleiter (8a, 8b) durchsetzt ist/sind.

7. Isolationssystem nach Anspruch 6,
**dadurch gekennzeichnet, dass** im Fügespalt (9) zwischen den Teilelementen (3, 3a, 3b, 3c, 4, 4a, 4b, 4c) ein Fügespalt (9) des Phasenleiters (8, 8a) angeordnet ist.

8. Montageverfahren eines Isolationssystems, welches eine im Wesentlichen scheibenförmige, eine Grundfläche überspannende elektrisch isolierende Isolationsanordnung (11a, 1b) aufweist,
**dadurch gekennzeichnet, dass**
- mit einem ersten Teilelement (3, 3a, 3b, 3c) zumindest teilweise eine Schnittstellenöffnung eines ersten Kapselungsgehäuses (11) verschlossen wird,
- mit einem zweiten Teilelement (4, 4a, 4b, 4c) zumindest teilweise eine Schnittstellenöffnung eines zweiten Kapselungsgehäuses (12) verschlossen wird,
- die Schnittstellenöffnungen aufweisende Schnittstellen der beiden Kapselungsgehäuse (11, 12) miteinander verbunden werden,
- nach Verbindung der Kapselungsgehäuse (11, 12) ein Fluidkanal (15) eröffnet wird, über welchen ein Fluid aus einem Aufnahmeraum eines der Kapselungsgehäuse (11, 12) in einen Fügespalt (9) zwischen den Teilelementen (3, 3a, 3b, 3c, 4, 4a, 4b, 4c) strömt.

9. Montageverfahren nach Anspruch 8,
**dadurch gekennzeichnet, dass**
die die Schnittstellenöffnungen aufweisenden Schnittstellen der beiden Kapselungsgehäuse (11, 12) unter Zwischenlage der die Teilelemente (3, 3a, 3b, 3c, 4, 4a, 4b, 4c) aufweisenden Isolationsanordnung (1, 1a, 1b) miteinander verbunden werden.

10. Montageverfahren nach einem der Ansprüche 8 oder 9,
**dadurch gekennzeichnet, dass** ein Phasenleiter einen ersten Abschnitt (8a) und einen zweiten Abschnitt (8b) aufweist, wobei der erste Abschnitt (8a) das erste Teilelement (3, 3a, 3b, 3c) durchsetzt und der zweite Abschnitt (8b) das zweite Teilelement (4, 4a, 4b, 4c) durchsetzt und während/nach einem Zusammenfügen der Kapselungsgehäuse (11, 12) die Abschnitte (8a, 8b) einander elektrisch leitend verbunden werden.

## Claims

1. Insulating system comprising an electrically insulating, substantially disk-shaped insulating arrangement (1, 1a, 1b), which spans a base area, wherein the insulating arrangement (1, 1a, 1b) has at least one first sub-element (3, 3a, 3b, 3c) and one second sub-element (4, 4a, 4b, 4c), between which a joining gap (9), which spans the base area, is arranged,
**characterized in that**
the joining gap (9) can be connected to a neighboring fluid volume by way of a switchable fluid channel (15).

2. Insulating system according to Claim 1,
**characterized in that**
a cavity, in particular a cavity that can be closed off in a fluid-tight manner, is arranged between the first sub-element (3, 3a, 3b, 3c) and the second sub-element (4, 4a, 4b, 4c).

3. Insulating system according to Claim 1 or 2,
**characterized in that**
the switchable fluid channel (15) has a switching device (16), in particular a switching device that can be actuated from a radial direction.

4. Insulating system according to one of Claims 1 to 3,
**characterized in that**
at least one of the sub-elements (3, 3a, 3b, 3c, 4, 4a, 4b, 4c) has a concavely fluted wall area.

5. Insulating system according to one of Claims 1 to 4,
**characterized in that**
at least one of the sub-elements (3, 3a, 3b, 3c, 4, 4a, 4b, 4c) has a predetermined breaking point (14).

6. Insulating system according to one of Claims 1 to 5,
**characterized in that**
at least one of the sub-elements (3, 3a, 3b, 3c, 4, 4a, 4b, 4c), in particular both sub-elements (3, 3a, 3b, 3c, 4, 4a, 4b, 4c), is/are passed through by a phase conductor (8a, 8b).

7. Insulating system according to Claim 6,
**characterized in that**
a joining gap (9) of the phase conductor (8, 8a) is arranged in the joining gap (9) between the sub-elements (3, 3a, 3b, 3c, 4, 4a, 4b, 4c).

8. Assembly method for an insulating system which has a substantially disk-shaped, electrically insulating insulating arrangement (1, 1a, 1b) spanning a base area,
**characterized in that**
- an interface opening of a first encapsulating housing (11) is at least partially closed by a first sub-element (3, 3a, 3b, 3c),
- an interface opening of a second encapsulating housing (12) is at least partially closed by a second sub-element (4, 4a, 4b, 4c),
- the interfaces that have interface openings of the two encapsulating housings (11, 12) are connected to one another,
- after connecting the encapsulating housings (11, 12), a fluid channel (15) is opened, allowing a fluid to flow out of a receiving space of one of the encapsulating housings (11, 12) into a joining gap (9) between the sub-elements (3, 3a, 3b, 3c, 4, 4a, 4b, 4c).

9. Assembly method according to Claim 8,
**characterized in that** the interfaces that have the interface openings of the two encapsulating housings (11, 12) are connected to one another, while interposing the insulating arrangement (1, 1a, 1b) that has the sub-elements (3, 3a, 3b, 3c, 4, 4a, 4b, 4c).

10. Assembly method according to either of Claims 8 and 9,
**characterized in that**
a phase conductor has a first portion (8a) and a second portion (8b), the first portion (8a) passing through the first sub-element (3, 3a, 3b, 3c) and the second portion (8b) passing through the second sub-element (4, 4a, 4b, 4c) and the portions (8a, 8b) being connected to one another in an electrically conducting manner during/after a joining together of the encapsulating housings (11, 12).

## Revendications

1. Système isolant comprenant un agencement (1, 1a, 1b) isolant sensiblement en forme de disque et isolant électriquement, qui recouvre une surface de base, l'agencement (1, 1a, 1b) isolant ayant au moins un premier et un deuxième sous-élément (3, 3a, 3b, 3c, 4, 4a, 4b, 4c) entre lesquels est disposé un interstice (9) de joint, qui recouvre la surface de base,
**caractérisé en ce que**
l'interstice (9) de joint peut communiquer avec un volume de fluide voisin par un conduit (15) pour du fluide commutable.

2. Système isolant suivant la revendication 1,
**caractérisé en ce qu'**
une cavité, pouvant notamment être fermée d'une manière étanche au fluide, est disposée entre le premier et le deuxième sous-élément (3, 3a, 3b, 3c, 4, 4a, 4b, 4c).

3. Système isolant suivant la revendication 1 ou 2,
**caractérisé en ce que**
le conduit (15) pour du fluide commutable a un dispositif (16) de commutation pouvant être actionné notamment à partir de la direction radiale.

4. Système isolant suivant l'une des revendications 1 à 3,
**caractérisé en ce qu'**
au moins l'un des sous-éléments (3, 3a, 3b, 3c, 4, 4a, 4b, 4c) a une surface de paroi à moulure concave.

5. Système isolant suivant l'une des revendications 1 à 4,
**caractérisé en ce qu'**
au moins l'un des sous-éléments (3, 3a, 3b, 3c, 4, 4a, 4b, 4c) a un point (14) destiné à se rompre.

6. Système isolant suivant l'une des revendications 1 à 5,
**caractérisé en ce qu'**
au moins l'un des sous-éléments (3, 3a, 3b, 3c, 4, 4a, 4b, 4c), notamment les deux sous-éléments (3, 3a, 3b, 3c, 4, 4a, 4b, 4c), est/sont traversés par un conducteur (8a, 8b) de phase.

7. Système isolant suivant la revendication 6,
**caractérisé en ce qu'**
un interstice (9) de joint du conducteur (8, 8a) de phase est disposé dans l'interstice (9) de joint entre les sous-éléments (3, 3a, 3b, 3c, 4, 4a, 4b, 4c).

8. Procédé de montage d'un système isolant, qui a un agencement (1, 1a, 1b) isolant sensiblement en forme de disque isolant électriquement et recouvrant une surface de base,
**caractérisé en ce que**
- on ferme, par un premier sous-élément (3, 3a, 3b, 3c), au moins en partie, une ouverture d'interface d'un premier boîtier (11) de blindage,
- on ferme, par un deuxième sous-élément (4, 4a, 4b, 4c), au moins en partie, une ouverture d'interface d'un deuxième boîtier (12) de blindage,
- on relie entre elles les interfaces, ayant les ouvertures d'interface, des deux boîtiers (11, 12) de blindage,
- après la liaison des boîtiers (11, 12) de blindage, on ouvre un conduit (15) pour du fluide, par lequel un fluide passe d'un espace de réception de l'un des boîtiers (11, 12) de blindage à un interstice (9) de joint entre les sous-éléments (3, 3a, 3b, 3c, 4, 4a, 4b, 4c).

9. Procédé de montage suivant la revendication 8,
**caractérisé en ce que**
les interfaces, ayant les ouvertures d'interface, des deux boîtiers (11, 12) de blindage sont reliées entre elles avec interposition de l'agencement (1, 1a, 1b) isolant ayant les sous-éléments (3, 3a, 3b, 3c, 4, 4a, 4b, 4c).

10. Procédé de montage suivant l'une des revendications 8 ou 9,
**caractérisé en ce qu'**
un conducteur de phase a un premier tronçon (8a) et un deuxième tronçon (8b), le premier tronçon (8a) traversant le premier sous-élément (3, 3a, 3b, 3c) et le deuxième tronçon (8b) traversant le deuxième sous-élément (4, 4a, 4b, 4c), et, pendant/après une jonction des boîtiers (11, 12) de blindage, les tronçons (8a, 8b), sont reliés l'un à l'autre d'une manière conductrice de l'électricité.
